(19) Europäisches Patentamt
European Patent Office
Office européen des brevets

(11) **EP 4 079 797 B1**

(12) **EUROPEAN PATENT SPECIFICATION**

(45) Date of publication and mention
of the grant of the patent:
**18.10.2023 Bulletin 2023/42**

(21) Application number: **22168964.9**

(22) Date of filing: **20.04.2022**

(51) International Patent Classification (IPC):
*C08J 9/224* (2006.01)    *C08J 9/232* (2006.01)
*B29B 9/06* (2006.01)    *B29B 9/12* (2006.01)
*B29C 44/34* (2006.01)    *C08J 9/00* (2006.01)

(52) Cooperative Patent Classification (CPC):
**C08J 9/0061; B29B 7/603; B29B 7/726;**
**B29B 7/7466; B29B 9/06; B29B 9/12;**
**B29C 44/3461; C08J 9/18; C08J 9/232;** B29B 7/42;
B29B 7/48; B29B 7/7433; C08J 9/122;
C08J 2201/03; C08J 2201/034;    (Cont.)

(54) **MULTILAYER EXPANDED BEADS AND MOLDED ARTICLE THEREOF**

MEHRSCHICHTIGE EXPANDIERTE KÜGELCHEN UND FORMARTIKEL DARAUS

PERLES EXPANSÉES MULTICOUCHES ET ARTICLE MOULÉ CORRESPONDANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.04.2021 JP 2021072878**

(43) Date of publication of application:
**26.10.2022 Bulletin 2022/43**

(73) Proprietor: **JSP Corporation**
**Tokyo 100-0005 (JP)**

(72) Inventor: **CHIBA, Takuya**
**Mie, 510-0881 (JP)**

(74) Representative: **Mai Besier**
**European Trademark Attorneys**
**Patentanwälte**
**Kreuzberger Ring 18a**
**65205 Wiesbaden (DE)**

(56) References cited:
**EP-A1- 3 309 197**    **US-A1- 2007 208 140**
**US-A1- 2011 147 974**

(52) Cooperative Patent Classification (CPC): (Cont.)
C08J 2323/16; C08J 2423/16

**Description**

Technical Field:

The present invention relates to multilayer expanded beads and to a molded article thereof.

Related Art:

Expanded beads molded articles obtained by in-mold molding of polypropylene-based resin expanded beads excel in lightness in weight, heat insulating property, rigidity and easiness in obtaining desired shapes and, therefore, are now used in a wide variety of applications including interior materials for automobiles, bumpers for automobiles, heat insulating materials, shock-absorbing packaging materials, returnable boxes, etc.

Such polypropylene-based resin expanded beads are strongly desired to be able to be molded using a low steam pressure from the standpoint of reduced production costs. To cope with this demand, Japanese patent publication JP-A-2004-068016 proposes multilayer polypropylene-based resin expanded beads each configured of a foamed core layer of a polypropylene-based resin and an outer layer of a polypropylene-based resin covering the foamed core layer, the melting point of the polypropylene-based resin of the outer layer being lower by 1.5-30.0°C than that of the core layer. Because of this configuration, the multilayer expanded beads allow the use of a reduced temperature in in-mold molding.

The following documents were cited in the course of Examination:

D1 US 2011/147974 A1 (NOHARATOKUNOBU [JP] ETAL) 23 June 2011 (2011-06-23)
D2 EP 3 309 197 A1 (JSP CORP [JP]) 18 April 2018 (2018-04-18)
D3 US2007/208140 A1 (WADA TORU [JP]3) 6 September 2007 (2007-09-06)

Documents D1-D3 disclose a multilayer bead comprising a foamed core layer comprising an ethylene-propylene random copolymer having an ethylene content within the claimed range of 1.5 to 3.5 % by mass and surface layer comprising an polyolefin-based resin and the foamed core layer and a molded article obtained from said beads, Examples 11 and 21 of D1 disclose ethylene content of 2.7 mass.-%, surface layer propylene-ethylene random copolymer;

D2, in examples 1-4, 6, 7 discloses ethylene content of 2.2-2.6 mass.-% and cover layer either ethylene-propylene random copolymer or a linear low density polyethylene;
D3, examples 25, 46, tables 3, 8, 9 disclose ethylene content of 2 or 3 mass.-% and coat layer LLDPE.

The above-described known multilayer expanded beads, however, have been found to require a relatively long time for cooling the molded product with water. From the standpoint of production efficiency, it is desired to further reduce the time required for produce expanded beads molded articles. If the molded product is taken out of the mold before the water cooling has not yet been completed for the purpose of reducing the production time, deformation or surface undulations will be caused in the obtained molded article. If the molding pressure (molding temperature) is lowered for the purpose of reducing the required cooling time, on the other hand, a problem of insufficient mutual fusion bonding between the expanded beads will be caused, which results in reduction of mechanical properties of the obtained molded articles.

A main objective problem to be solved by the present invention is to provide multilayer expanded beads that permit a reduction of a water cooling time required for in-mold molding of multilayer expanded beads articles and that enable to produce the molded articles with a shortened production cycle time. Another objective problem to be solved by the present invention is to provide multilayer expanded beads that permit the use of a low steam pressure in an in-mold molding process for producing multilayer expanded beads articles. It is a still another objective problem to be solved by the present invention to provide a multilayer expanded beads molded article that has excellent mechanical properties and that is produced with a reduced production cycle time.

In accordance with the present invention, there is provided a multilayer expanded bead as follows:

[1] A multilayer expanded bead comprising a foamed core layer comprising an ethylene-propylene random copolymer, and a surface layer comprising a polyolefin-based resin and covering the foamed core layer,

wherein the ethylene-propylene random copolymer has an ethylene unit content of 1.5% by mass or more and 3.5% by mass or less, a number average molecular weight (Mn) of 30,000 or more and 50,000 or less and a weight average molecular weight (Mw) of 200,000 or more and 500,000 or less, and
wherein a ratio (Mw/Mn) of the weight average molecular weight (Mw) to the number average molecular weight (Mn) is 7 or more and 15 or less.

[2] The multilayer expanded bead according to above [1], wherein the ethylene-propylene random copolymer has a crystallization temperature of TcA [°C] and a melting point of TmA [°C] and wherein the crystallization temperature TcA and melting point TmA satisfy the following relationship:

$$40 \leq TmA - TcA \leq 50.$$

[3] The multilayer expanded bead according to above [1] or [2], wherein the ethylene-propylene random copolymer has a Z average molecular weight (Mz) and wherein a ratio (Mz/Mn) of the Z average molecular weight (Mz) to the number average molecular weight (Mn) is 30 or more and 60 or less.
[4] The multilayer expanded bead according to any one of above [1] to [3], wherein the polyolefin-based resin of the surface layer has a melting point of TmB [°C] and wherein the melting point TmB and melting point TmA satisfy the following relationship:

$$0 \leq TmA - TmB \leq 20.$$

[5] The multilayer expanded bead according to any one of above [1] to [4], wherein the multilayer expanded bead has a bulk density of 10 kg/m$^3$ or more and 300kg/m$^3$ or less.
[6] The multilayer expanded bead according to any one of claims 1 to 5, wherein a melt flow rate of the polyolefin-based resin of the surface layer is 1 g/10min or more and 20 g/10min or less and is smaller than that of the ethylene-propylene random copolymer of the foamed core layer,

wherein the polyolefin-based resin of the surface layer is a polypropylene-based resin or a polyethylene-based resin, and
wherein the melt flow rate is as measured at

(i) a temperature of 230°C and a load of 2.16 kg when the polyolefin-based resin is the polypropylene-based resin,
(ii) a temperature of 190°C and a load of 2.16 kg when the polyolefin-based resin is the polyethylene-based resin.

[7] The multilayer expanded bead according to any one of above [1] to [6], wherein the polyolefin-based resin of the surface layer is an ethylene-propylene random copolymer.
[8] The multilayer expanded bead according to above [7,] wherein the ethylene-propylene random copolymer of the surface layer has an ethylene unit content that is greater than that of the ethylene-propylene random copolymer of the foamed core layer.
[9] The multilayer expanded bead according to any one of above [1] to [8], wherein a weight ratio of the foamed core layer to the surface layer is in the range of 99.5:0.5 to 65:35.

In another aspect, the present invention provides:
an expanded beads molded article comprising a multiplicity of the multilayer expanded beads according to any one of above [1] to [9] that are mutually fusion-bonded together.

Brief Description of the Drawing:

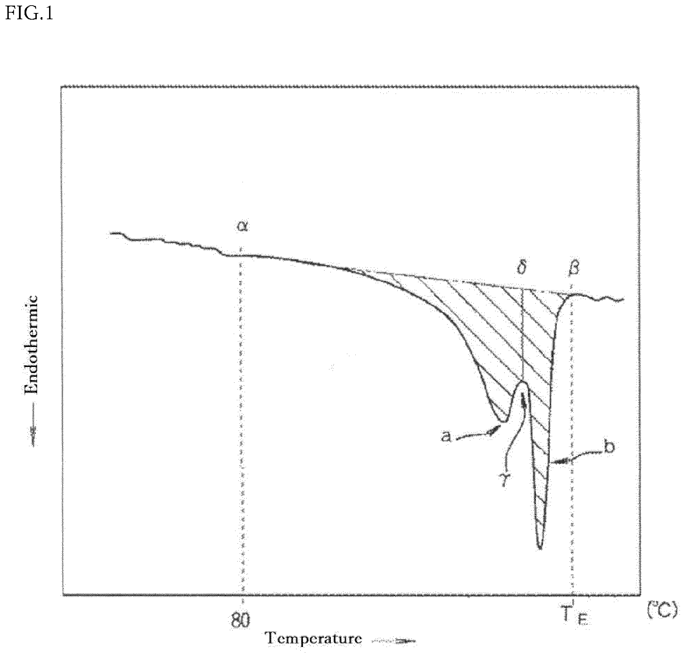

FIG. 1 is a schematic diagram showing an example of a first time DSC curve obtained by heat flux differential scanning calorimetry performed on the expanded beads of the present invention.

Embodiments of the Invention:

The present invention relates to a multilayer expanded bead as defined in the appended claims. The multilayer expanded bead is hereinafter also simply referred to as "expanded bead". In the specification and claims, the singular form (a, an, the) includes the plural form unless the context clearly indicates otherwise. Thus, for example, "an expanded bead" is intended to include "two or more expanded beads". In the present specification, a numerical range is inclusive of the end points; for example, "5 to 25" representing a numerical range is synonymous with "5 or more and 25 or less", and represents a numerical range including 5 and 25 which are end points of the numerical range. Further, in the specification and claims, the end points of the numerical ranges including sub-ranges are independently combinable with each other; for example, ranges of "preferably 5 to 25, more preferably 10 to 20, still more preferably 12 to 18" includes all intermediate values of the ranges "10 to 25, 5 to 20, 10 to 18, etc.").

The present invention provides a multilayer expanded bead comprising a foamed or expanded core layer that contains an ethylene-propylene random copolymer, and a surface layer that contains a polyolefin-based resin and that covers the foamed core layer.

The foamed core layer (hereinafter also referred to simply as "core layer") is in an expanded state. The term "expanded state" as used herein is intended to mean that the ethylene-propylene random copolymer that constitute the core layer forms cell walls that define a multiplicity of cells therein.

The surface layer, which comprises the polyolefin-based resin and covers the core layer may partly contribute to reduce a water cooling time required for producing a multilayer expanded beads molded article by in-mold molding process. The surface layer may or may not be in an expanded state. However, the surface layer is preferably in a substantially non-expanded state in order for the molded article obtained from the multilayer expanded beads to have excellent mechanical strength. The "substantially non-expanded state" herein refers not only to the case where cells are not present at all (including the case where cells once formed when the resin particles were expanded have been completely melt-fractured) but also to the case where there are a small number of very micro cells in such a degree that the mechanical strength of the resulting expanded beads molded article will not be adversely affected.

In the multilayer expanded bead, the foamed core layer may be completely covered with the surface layer. Alternately, however, the foamed core layer may be partially exposed on the surface of the multilayer expanded bead. Examples of the structure in which the foamed core layer is partially exposed include a structure in which only the side periphery of a cylindrical foamed core layer is covered with the surface layer and the foamed core layer is exposed at the top and bottom of the cylinder.

The resin constituting the foamed core layer of the multilayer expanded beads will be described in detail below.

The foamed core layer contains an ethylene-propylene random copolymer (hereinafter also referred to simply as "random copolymer (A) for the purpose of brevity"), as a base resin for the foamed core layer. The term "base polymer for the foamed core layer" as used herein is intended to mean any polymer or resin that is capable of forming a foamed core layer having a multiplicity of cells.

It is important that the random copolymer (A) has an ethylene unit content (EtA) of 1.5 to 3.5% by mass in order to reduce a water cooling time required for cooling an obtained molded product in an in-mold molding process and to thereby reduce the time required to perform one cycle of the in-mold molding process. For this reason, the ethylene unit content (EtA) of the random copolymer (A) is preferably 1.8 to 3% by mass, more preferably 2 to 2.5% by mass. The use of the random copolymer (A) may also improve secondary expansion properties and in-mold moldability of the multilayer expanded beads.

The ethylene unit content (EtA) of the random copolymer (A) is measured by the following method in the present specification. Plural kinds of random copolymers (A) having known comonomer contents are molded by hot press in an atmosphere at 180°C to obtain films having a thickness of about 100 $\mu$m. Each of the films is then measured for its IR spectrum, from which an absorbance ($I_{810}$) at 810 cm$^{-1}$ attributed to propylene and an absorbance ($I_{733}$) at 733 cm$^{-1}$ attributed to ethylene are read. Absorbance ratio ($I_{733}/I_{810}$) is taken on the X axis, and the amount of ethylene comonomer is taken on the Y axis to obtain a calibration curve for the ethylene comonomer content. The random copolymer (A) sample to be measured is subjected to IR measurement in the same manner as above to determine its absorbance ratio ($I_{733}/I_{810}$). From the measured absorbance ratio ($I_{733}/I_{810}$), the ethylene unit content (EtA) is calculated on the basis of the previously obtained calibration curve.

It is important that the random copolymer (A) has a number average molecular weight (Mn) of 30,000 to 50,000, a weight average molecular weight (Mw) of 200,000 to 500,000 and a ratio (Mw/Mn) of the weight average molecular weight (Mw) to the number average molecular weight (Mn) of 7 to 15. When the ratio (Mw/Mn) is less than 7, there is a possibility that a molded article obtained by in-mold molding of the multilayer expanded beads is not sufficiently prevented from being deformed during water cooling thereof. On the other hand, when the ratio (Mw/Mn) is greater than 15, there is a possibility that the molding temperature is not able to be sufficiently lowered and, hence, water cooling time required for cooling the obtained multilayer expanded beads molded article is not able to be shortened. From this point of view, the ratio (Mw/Mn) is preferably 7.5 to 13, more preferably 8 to 10, particularly preferably 8.5 to 9.5.

For reasons of improved shortening of the water cooling time, the number average molecular weight (Mn) is preferably 32,000 to 43,000, still more preferably 34,000 to 42,000, and the weight average molecular weight (Mw) is preferably 320,000 to 450,000, still more preferably 330,000 to 430,000.

Although not wishing to be bound by the theory, it is inferred that the effect of reducing the water cooling time by the use of the random copolymer (A) in the present invention is attained for the following reasons. The heat conductivity and rigidity of an ethylene-propylene random copolymer are considered to depend upon crystallization behavior of low molecular weight molecules and high molecular weight molecules constituting the copolymer. During the molding process of the molded article, the random copolymer (A), which has the specific ethylene unit content (EtA), specific molecular weights (Mn) and (Mw) and specific ratio (Mw/Mn), is considered to exhibit optimum crystallization behavior that is best suited to improve the heat conductivity and rigidity thereof. Such improved heat conductivity and rigidity of the random copolymer (A) contribute to improving the cooling efficiency and deformation resistance of the molded product and to thereby reducing the water cooling time.

It is preferred that the random copolymer (A) has a ratio (Mz/Mn) of a Z average molecular weight (Mz) thereof to the number average molecular weight (Mn) of 30 to 60 for reasons of improved resistance to deformation of the obtained molded article. Namely, when the random copolymer (A) having such a specific ratio (Mz/Mn) is used for forming the foamed core layer of the multilayer expanded beads, a molded article of the multilayer expanded beads is prevented from deforming even when the water cooling time is reduced. Thus, the water cooling time may be reduced without causing a reduction of the moldability at a low steam pressure in in-mold molding stage.

As used herein, the molecular weights (Mn), (Mw) and (Mz) are measured by the following method. Sampled expanded beads (30 mg) are shaken in 20 mL of o-chlorobenzene at 145°C and then hot filtered through a 1.0$\mu$m sintered filter. The thus pretreated sample is subjected to gel chromatography in any known manner.

It is also preferred that the random copolymer (A) has such a crystallization temperature (TcA) [°C] and a melting point (TmA) [°C] that satisfy the following relationship:

$$40 \leq TmA - TcA \leq 50.$$

When the random copolymer A having a crystallization temperature (TcA) and a melting point (TmA) which satisfy the above relationship is used for forming the foamed core layer of the multilayer expanded beads, a molded article with excellent physical properties is obtained by in-mold molding of the multilayer expanded beads even with a low steam pressure. It is inferred that crystallization of the random copolymer (A) which satisfy the above relationship between the TmA and TcA tends to occur in an early stage of the water cooling of the molded article multilayer expanded beads so that the water cooling time is able to be shortened.

For the above reasons, the melting point (TmA) and crystallization temperature (TcA) are more preferred to satisfy:

$$41 \leq TmA - TcA \leq 48,$$

and particularly preferred to satisfy:

$$42 \leq TmA - TcA \leq 45.$$

The melting point (TmA) as used herein is intended to refer to the peak top temperature of a melting peak on a DSC curve measured by heat flux differential calorimetry according to JIS K7121 (1987) in which "(2) Measurement after carrying out a determined heat treatment" is adopted as the sample adjusting conditions. The heating rate in the measurement of the melting peak is 10°C/min. When a plurality of melting peaks are present in the DSC curve, the peak top temperature of the melting peak that has the largest peak area represents the melting point. The above melting point measuring method is also adopted for measuring a melting point (Tmf) of expanded beads (described hereinlater).

The crystallization temperature (TcA) as used herein is intended to refer to the peak top temperature of a crystallization peak on a DSC curve measured by heat flux differential calorimetry according to JIS K7121 (1987) in which "(2) Measurement after carrying out a determined heat treatment" is adopted as the sample adjusting conditions. The cooling rate in the measurement of the crystallization peak is 10°C/min. When a plurality of crystallization peaks are present in the DSC curve, the peak top temperature of the crystallization peak that has the largest peak area represents the crystallization temperature. The above crystallization temperature measuring method is also adopted for measuring a crystallization temperature (Tcf) of expanded beads (described hereinlater).

For reasons of improved secondary expansion of the expanded beads and improved mutual fusion bonding between the expanded beads, it is preferred that the random copolymer (A) has a heat of fusion ($\Delta$Hr) of 50 to 100 J/g, more preferably 60 to 90 J/g. The heat of fusion ($\Delta$Hr) as used herein is intended to refer to a heat of fusion (calorific value) of a melting peak on a DSC curve measured by heat flux differential calorimetry according to JIS K7122 (1987) in which "(2) Measurement after carrying out a determined heat treatment" is adopted as the sample adjusting conditions. The cooling rate in the heat treatment is 10°C/min. In the measurement of the melting peak, the heating rate is 10°C/min. When a plurality of melting peaks are present in the DSC curve, the melting peak that has the largest peak area represents the heat of fusion ($\Delta$Hr). The above melting point measuring method is also adopted for measuring a heat of fusion ($\Delta$Hr)

of a polyolefin-based resin (described hereinlater).

The base resin constituting the foamed core layer may contain one or more kinds of other polymers and resins, such as a thermoplastic resin and a thermoplastic elastomer, in addition to the random copolymer (A) as long as the objects and effects of the present invention are not adversely affected. The amount of such other polymers and resins is preferably 80 % by weight or less, more preferably 90% by weight or less, most preferably 95 % by weight or less, based on 100 % by weight of the base resin (namely based on the total weight of the random copolymer (A) and the other polymers and resins).

The foamed core layer may contain one or more additives, such as a coloring agent (carbon black, for instance), a lubricant, a catalyst neutralizer and an antioxidant, as long as the objects and effects of the present invention are not adversely affected. The amount of such additives depends upon the kind thereof and purpose of addition thereof, but is generally 15 parts by weight or less, preferably 10 parts by weight or less, more preferably 5 by weight or less, most preferably 1 part by weight or less, based on 100 parts by weight of the random copolymer (A).

It is also preferred that the random copolymer (A) has a bending modulus of 800 to 1,100 MPa, more preferably 850 to 1,000 MPa, since the expanded beads obtained with the use thereof as foamed core layer are prevented from deforming in an in-mold molding stage and are able to give a molded article having good physical properties.

As used herein, the bending modulus is as measured according to the method specified in JIS K7171(2008). More specifically, a sample resin is heat pressed to obtain a sheet having a thickness of 4 mm, from which a test piece having a length of 80 mm and a width of 10 mm is cut out. The tests piece is measured for its bending modulus under conditions involving an indenter radius R1 of 5 mm, a fulcrum radius R2 of 5 mm, a span between fulcrums of 64 mm and a test speed of 2 mm/min.

It is further preferred that the random copolymer (A) has a melt flow rate (MFR) of 1 g/10min to 20 g/10min, more preferably 2 g/10min to 15 g/10min, still more preferably 3 g/10min to 10 g/10min, for reasons of easiness in preparing the multilayer expanded beads. As used herein, the melt flow rate is as measured according to JIS K7210(1999) under conditions of M (a temperature of 230°C and a load of 2.16 kg).

Next, the resin constituting the surface layer will be described.

The surface layer, which contributes to improve the fusion bonding between the multilayer expanded beads of a molded article of the multilayer expanded beads, contains a polyolefin-based resin (hereinafter also referred to as polyolefin resin (B)) as a base resin of the surface layer. The term "base resin for the surface layer" as used herein is intended to mean any polymer or resin that is capable of forming a surface layer covering a foamed core layer having a multiplicity of cells.

The polyolefin resin (B) forming the surface layer is a polymer containing an olefin as a major monomer component. The constitution and method for the manufacture thereof are not specifically limited. The polyolefin resin (B) is preferably a resin containing at least 50% by weight, more preferably at least 70% by weight, still more preferably at least 90% by weight, of olefin components. Examples of the polyolefin resin (B) include polypropylene-based resin, polyethylene-based resin and mixtures thereof.

The polypropylene-based resin may be, for example, a propylene homopolymer, a copolymer of propylene and one or more other copolymerizable olefinic comonomers or a mixture of two or more of these polymers. Examples of the copolymerizable olefinic comonomer include ethylene and α-olefins having 4 or more carbon atoms such as 1-butene. Examples of the polypropylene-based resin include an ethylene-propylene random copolymer, an ethylene-propylene block copolymer, an ethylene-propylene-butene random copolymer and mixtures of two or more thereof.

Examples of the polyethylene-based resin include a high density polyethylene, a medium density polyethylene, a low density polyethylene, a linear low density polyethylene, a very low density polyethylene, an ethylene-vinyl acetate copolymer and mixtures of two or more thereof.

Among the exemplified polyolefin resins (B), an ethylene-propylene random copolymer, an ethylene-propylene-butene random copolymer and a mixture thereof (these copolymers will be hereinafter sometimes collectively referred to as "random copolymer (B)") are preferred. Particularly preferred random copolymer (B) is an ethylene-propylene random copolymer.

When the random copolymer (B) is used in the surface layer, it is preferred that an ethylene unit content (EtB) of the random copolymer (B) is greater than an ethylene unit content (EtA) of the random copolymer (A) of the foamed core layer (namely, the ratio (EtB/EtA) is preferred to exceed 1), since the surface layer has improved affinity with the foamed core layer and is less likely to separate from the foamed core layer during an in-mold molding process and since an expanded beads molded article obtained has improved surface smoothness. For these reasons, the ratio (EtB/EtA) is more preferably 1.2 to 3, still more preferably 1.4 to 2.5, particularly preferably 1.6 to 2. The ethylene unit content (EtB) of the random copolymer (B) may be measured by the same method as that of the ethylene unit content (EtA) of the random copolymer (A).

The base resin constituting the surface layer may contain one or more kinds of other polymers and resins, such as a thermoplastic resin and a thermoplastic elastomer, in addition to the polyolefin resin (B) as long as the objects and effects of the present invention are not adversely affected. The amount of such other polymers and resins is preferably 15 % by weight or less, more preferably 10 % by weight or less, most preferably 5 % by weight or less, based on 100 % by weight of the base resin (namely based on the total weight of the polyolefin resin (B) and the other polymers and resins).

The surface layer may contain one or more additives, such as an antistatic agent, a catalyst neutralizer, a lubricant and a coloring agent (carbon black, for instance), as long as the objects and effects of the present invention are not adversely affected. The amount of such additives depends upon the kind thereof and purpose of addition thereof, but is generally 15 parts by weight or less, preferably 10 parts by weight or less, more preferably 5 by weight or less, most preferably 3 parts by weight or less, based on 100 parts by weight of the polyolefin resin (B).

Because of the presence of the surface layer, the multilayer expanded beads have improved mutual fusion bonding properties. In this relation, it is desired that the multilayer expanded beads of the present invention are capable of producing an expanded beads molded article by an in-molding molding process using a lower steam pressure (lower steam temperature) than that required for molding a similar expanded beads molded article by use of single layer expanded beads which have the same constitution as that of the foamed core layers of the multilayer expanded beads except for absence of the surface layers. The "similar expanded beads molded article" herein is intended to mean a molded product having physical properties, such as surface appearance, mutual fusion-bonding between the beads and dimension recoverability, that are comparable to those obtained from the single layer expanded beads.

It is preferred that the polyolefin resin (B) constituting the surface layer has a lower melting point than that of the random copolymer (A), since it is easy to achieve the effect of reducing steam pressure in the in-molding molding process. Such multilayer expanded beads are able to give, through in-mold molding thereof, an expanded beads molded article having good mutual fusion bonding between the expanded beads, since the surface layers thereof are already softened when the foamed core layers thereof are heated and secondarily expanded. Additionally, the cell structures of the foamed core layers are less susceptible to be damaged during the in-mold molding process so that shrinkage of the obtained molded article may be minimized. It is not essential, however, that the polyolefin resin (B) of the surface layer has a lower melting point than that of the random copolymer (A).

For the above-described reasons, the melting point (TmB) [°C] of the polyolefin resin (B) and the melting point (TmA) [°C] of the random copolymer (A) are preferred to satisfy the following relationship:

$$0 \leq TmA - TmB \leq 20,$$

more preferably the following relationship:

$$5 \leq TmA - TmB \leq 18,$$

still more preferably the following relationship:

$$8 \leq TmA - TmB \leq 15.$$

It is preferred that the polyolefin resin (B) has a heat of fusion (ΔHr) of 50 to 90 J/g, more preferably 55 to 80 J/g from the standpoint of fusion bonding between the expanded beads. The heat of fusion (ΔHr) of the polyolefin resin (B) is as measured by the method described previously in connection with of the random copolymer (A).

It is preferred that the polyolefin resin (B) has a bending modulus of 500 to 1,000 MPa, more preferably 550 to 800 MPa, for reasons of improved balance between fusion bonding and moldability of the expanded beads. The bending modulus of the polyolefin resin (B) is as measured by the method described previously in connection with the random copolymer (A).

It is further preferred that the polyolefin resin (B) has a melt flow rate (MFR) of 1 g/10min to 20 g/10min, more preferably 2 g/10min to 15 g/10min, still more preferably 3 g/10min to 10 g/10min, for reasons of improved fusion bonding between the multilayer expanded beads. The melt flow rate (MFR) of the polyolefin resin (B) is preferred to be lower than that of the random copolymer (A) for reasons of further improved fusion bonding between the multilayer expanded beads.

As used herein, the melt flow rate (MFR) is as measured according to JIS K7210-1(2014) under conditions involving a temperature of 230°C and a load of 2.16 kg, when the polyolefin resin (B) is a propylene-based resin. In the case of a polyethylene-based resin, a temperature of 190°C and a load of 2.16 kg are adopted. When the polyolefin resin (B) is a random copolymer (B), the melt flow rate (MFR) thereof is measured by the same method as that described previously in connection with the random copolymer (A).

It is preferred that a weight ratio of the foamed core layer to the surface layer is in the range of 99.5:0.5 to 65:35, more preferably 99:1 to 80:20, still more preferably 97:3 to 80:20, particularly preferably 97:3 to 85:15, in view of good moldability of the multilayer expanded beads. The weight ratio may be controlled, for example, by adjusting the amounts of a core layer forming melt and a surface layer forming melt to be discharged from a coextrusion die for forming multilayer strands, which will be described hereinafter.

Next, physical properties of the multilayer expanded beads of the present invention will be described.

The expanded beads preferably have a bulk density of 10 to 300 kg/m$^3$. Generally, when the bulk density of expanded beads is within the above range, dimensional change of a molded article obtained therefrom by in-mold molding process tends to undergo a dimensional change. In order to prevent the dimensional change, it is necessary to increase a water cooling time. On the other hand, since the multilayer expanded beads of the present invention are effective to reduce water cooling time in an in-mold molding process, it is possible to obtain a molded article having reduced dimensional change even when the bulk density thereof is within the above range. Namely, when the bulk density is within the above range, the water cooling time reducing effect of the expanded beads of the present invention is prominently exhibited. Additionally, such expanded beads are capable of forming a wide variety of molded articles such as interior materials for automobiles, bumpers for automobiles, heat insulating materials, shock-absorbing packaging materials and returnable boxes. For the above reasons, the bulk density of the multilayer expanded beads is more preferably 20 to 250 kg/m$^3$, still more preferably 23 to 200 kg/m$^3$, particularly preferably 25 to 100 kg/m$^3$.

As used herein, the bulk density is measured as follows. An empty 1L measuring cylinder is provided. The expanded beads are filled in the measuring cylinder up to the 1L mark line thereof in a natural sedimentation state while removing static electricity thereof. The weight of the expanded beads is then measured. The bulk density of the expanded beads is obtained by dividing the weight of the expanded beads by the volume thereof, followed by unit conversion to [kg/m$^3$].

It is preferred that the foamed core layers of the multilayer expanded beads have an average cell diameter of 20 to 400 $\mu$m, more preferably 40 to 250 $\mu$m, still more preferably 100 to 230 $\mu$m, particularly preferably150 to 200 $\mu$m, since the expanded beads show good in-mold moldability and since the molded article obtained therefrom shows excellent dimension recoverability.

As used herein, the average cell diameter of the expanded beads is determined as follows based on enlarged microscopic images of cross-sections of expanded beads divided into nearly equal halves. First, on the enlarged image of the cross section of each expanded bead, four line segments each passing nearly through the center of the cross section and extending from one surface of the expanded bead to the other surface thereof are drawn such that eight angularly equally spaced straight lines extend radially from nearly the center of the cross section toward the external surface of the expanded bead. Then, a total number N of the cells that intersect the above four line segments is counted. Also measured is a total length L ($\mu$m) of the four line segments. The value (L/N) obtained by dividing the total length L by the total number N is defined as the average cell diameter of the expanded bead. Similar procedures are repeated for ten expanded beads in total. The arithmetic mean of the average cell diameters of the ten expanded beads represents the average cell diameter ($\mu$m) of the expanded beads. The bulk density of the resulting expanded beads may be controlled by adjustment of the amount of the blowing agent, the foaming temperature and the above described difference in pressure at the time of the foaming.

The expanded beads preferably have a closed cell content of 75% to 100%, more preferably 80% to 99%, still more preferably 82% to 95%, particularly preferably 85% to 95%. When the closed cell content is within the above range, the expanded beads show good secondary expansion property thereof and give a molded article having improved mechanical properties.

As used herein, the closed cell content of the expanded beads is measured as follows. The expanded beads are allowed to stand for 10 days for aging in a thermostatic chamber at 23°C under atmospheric pressure and a relative humidity of 50%. In the same thermostatic chamber, about 20 cm$^3$ bulk volume of the expanded beads thus aged are sampled and measured for the precise apparent volume Va by a water immersion method described below. The sample beads whose apparent volume Va has been measured are fully dried and measured for their true volume Vx according to Procedure C of ASTM D-2856-70 using Air Comparison Pycnometer model-930 manufactured by Toshiba Beckman Inc. From the volumes Va and Vx, the closed cell content is calculated by the formula shown below. The average (N=5) is the closed cell content of the expanded beads.

$$\text{Closed cell content (\%)} = (Vx - W/\rho) \times 100/(Va - W/\rho)$$

In the above formula:

Vx represents the true volume (cm$^3$) of the expanded beads measured by the above method, which corresponds to a sum of a volume of the resin constituting the expanded beads and a total volume of all the closed cells in the expanded beads,

Va represents an apparent volume (cm$^3$) of the expanded beads, which is measured by a rise of the water level when the expanded beads are immersed in water contained in a measuring cylinder,

W is a weight (g) of the sample expanded beads used for the measurement; and

$\rho$ is a density (g/cm$^3$) of the resin constituting the expanded beads.

It is also preferred that the expanded beads show on a DSC curve thereof a melting peak intrinsic to the base resin constituting the foamed core layers of the expanded beads (hereinafter occasionally referred to simply as "intrinsic melting peak") and another melting peak that is attributed to secondary crystallization of the base resin formed during the course of expansion step and that is located on a higher temperature side of the above intrinsic melting peak (hereinafter occasionally referred to simply as "high temperature peak").

The DSC curve is obtained by heat flux differential scanning calorimetry. More specifically, a measurement sample (about 2 to 10 mg) from the expanded beads is heated from 23°C to 220°C at a heating rate of 10°C/min to obtain a first time DSC curve.

FIG. 1 shows an example of the first time DSC curve obtained by performing heat flux differential scanning calorimetry on the expanded beads obtained by the process of the present invention. In FIG. 1, "a" indicates an intrinsic melting peak that appears on a lower temperature side, "b" indicates a high temperature peak, $\alpha$ indicates a point on the DSC curve at 80°C, $T_E$ indicates a melting end temperature at which the foot of high temperature peak "b" on the higher temperature side returned to the position of the base line, $\beta$ indicates a point on the DSC curve at the melting end temperature $T_E$, $\gamma$ indicates a point on the DSC curve at the bottom of the valley between the intrinsic melting peak "a" and the high temperature peak "b", and $\delta$ indicates a point at which the vertical line (parallel with the ordinate) passing through the point $\gamma$ meets the line connecting the points $\alpha$ and $\beta$.

The intrinsic peak "a" preferably has a peak top temperature of 135°C to 145°C, more preferably 138°C to 142°C, for reasons of easiness in forming highly crystalline crystals by cooling a molded article of the multilayer expanded beads. Such crystals contribute to improve the rigidity of the molded article. For the same reasons, the temperature at the point "$\gamma$" which is the bottom of the valley between the intrinsic melting peak "a" and the high temperature peak "b" is preferably 150°C to 160°C, more preferably 152°C to 155°C.

The heat of fusion (calorific value) of the intrinsic melting peak "a" is preferably 50 to 70 J/g, more preferably 55 to 65 J/g, for reasons of improved dimensional stability of a molded article of the multilayer expanded beads after being cooled.

The heat of fusion of the intrinsic melting peak "a" corresponds to the area surrounded by the straight line connecting the points $\delta$ and $\gamma$, the DSC curve from the point $\alpha$ to the point $\gamma$ and the straight line connecting the points $\alpha$ and $\beta$.

The high temperature peak "b" preferably has a peak top temperature of 155°C to 165°C, more preferably 157°C to 162°C, for reasons of improved mechanical properties of a molded article of the multilayer expanded beads. For the same reasons, a difference between the peak top temperature of the high temperature peak "b" and the melting end temperature $T_E$ is preferably 5°C to 10°C, and the melting end temperature $T_E$ is preferably 165°C to 170°C, more preferably 166°C to 169°C.

The heat of fusion ($\Delta$H2) of the high temperature peak "b" is preferably 10 J/g to 15 J/g for reasons reduced dimensional change of a molded article of the expanded beads and improved mechanical strength. The high temperature peak "b" of the foamed core layers (or expanded beads) may be produced and controlled by any known method such as Japanese Unexamined Patent Publication JP-A-2001-151928.

The high temperature peak "b" appears in the first time DSC curve obtained as described above, but does not appear in a second time DSC curve that is obtained when the measurement sample after the measurement of the first time DSC curve is maintained at the first temperature for 10 minutes, then cooled to 30°C at a cooling rate of 10°C/min and again heated to a second temperature higher by 30°C than a melting peak end temperature at a heating rate of 10°C/min. In the second DSC curve, only the intrinsic melting peak "a" intrinsic to the base resin constituting the foamed core layers appears.

The heat of fusion ($\Delta$H2) of the high temperature peak "b" corresponds to the area surrounded by the straight line $\delta$-$\gamma$, straight line $\alpha$-$\beta$ and the DSC curve $\gamma$-$\beta$ of the high temperature peak "b".

Next, a multilayer expanded beads molded article (hereinafter also referred to simply as "molded article") obtained by in-mold molding of the multilayer expanded beads of the present invention will be described. The molded article preferably has a density of 10 to 300kg/m$^3$, more preferably 20kg/m$^3$ to 200kg/m$^3$, still more preferably 30kg/m$^3$ to 100kg/m$^3$. A molded article of expanded beads generally requires a long molding process time especially when the density thereof is small. In this respect, the molded article of the multilayer expanded beads of the present invention having the density in the above range is advantageous. The density of the molded article may be determined from the weight and external dimensions thereof.

The compressive stress at 50% strain of the molded article is preferably 200 to 700 kPa, more preferably 250 to 600 kPa, still more preferably 300 to 500 kPa from the standpoint of mechanical strength.

Description will be next made of a method for producing the multilayer expanded beads. In one preferred embodiment, the multilayer expanded beads may be produced by foaming and expanding multilayer particles each having a core layer which contains the random copolymer (A) and a surface layer which covers the core layer and which contains the polyolefin resin (B).

The multilayer resin particles (hereinafter also simply referred as resin particles) may be produced as follows. A device having two first and second extruders connected to a coextrusion die, is used. The first extruder is used for forming the core layer, while the second extruder is used for forming the surface layer. The random copolymer (A) and, if desired, optional additives, such as a cell controlling agent and, are fed to the first extruder and melted and kneaded to obtain a first molten resin mixture for forming the core layer. On the other hand, the polyolefin resin (B) and, if desired, optional additives are fed to the second extruder and melted and kneaded to obtain a second molten resin mixture for forming the surface layer.

The first molten resin mixture is fed to the coextrusion die to form a linear flow. At the same time, the second molten resin mixture is fed into the coextrusion die such that the linear flow of the first molten resin is surrounded by and laminated with the second molten resin, thereby forming a composite molten resin stream that has a core-sheath structure. The composite molten resin stream is then extruded, in the form of one or more strands, through small holes of a die attached to an exit of the extruder. Multilayer resin particles may be obtained by, for example, cutting the strands, after having been passed through water, into suitable lengths or by simultaneously cutting and cooling the strands as soon as the composite molten resin has been extruded through the die into water.

The method for producing multilayer resin particles using a coextrusion die as described above is disclosed in detail in, for example, Japanese Examined Patent Publications Nos. JP-S41-16125, JP-S43-23858 and JP-S44-29522 and Japanese Unexamined Patent Publication No. JP-A-S60-185816.

The first molten mixture for forming the foamed core layer preferably contains a cell controlling agent for controlling the cells of the foamed core layer. In other words, the foamed core layers of the expanded beads preferably contain the cell controlling agent. Example of the cell controlling agent include talc, calcium carbonate, borax, zinc borate, aluminum hydroxide and other inorganic compounds such as alum. The cell controlling agent is preferably added in an amount of 0.001 to 10 parts by mass, more preferably 0.01 to 5 parts by mass, per 100 parts by mass of the copolymer resin (A). Although the cell controlling agent may be added as such, it is generally preferred that the cell controlling agent is added in the form of a master batch thereof in view of its dispersibility.

In order to ensure uniform filling of the multilayer expanded beads in a mold cavity at the time of in-mold molding, the strands are preferably cut such that the multilayer resin particles each have a weight of 0.02 to 20 mg, more preferably 0.1 to 6 mg.

The multilayer expanded beads of the present invention may be obtained by any known method such as by a dispersing medium release foaming method in which the resin particles are dispersed in a dispersing medium, such as water, contained in a closed vessel such as an autoclave together with a physical blowing agent, etc. The dispersing medium is then heated to a temperature not lower than the softening point of the resin particles to impregnate the resin particles with the blowing agent. With the pressure inside the closed vessel maintained at a pressure not lower than the vapor pressure of the blowing agent, an end portion of the closed vessel that is located beneath the water level is opened to release the expandable resin particles containing the blowing agent together with the dispersing medium such as water from the closed vessel to an atmosphere which is maintained at a pressure lower than that in the closed vessel, generally the atmospheric pressure, to foam and expand the resin particles. Alternatively, the expandable resin particles which contain a physical blowing agent may be taken out of the closed vessel and then heated with a heating medium such as steam to foam and expand the resin particles.

In another preferred embodiment, the expanded beads may be prepared by an extrusion foaming method in which a blowing agent is injected into the above-described first extruder so that the first molten mixture contains the blowing agent and becomes a foamable molten mixture. The foamable molten mixture is then fed to the coextrusion die and subjected to the same process as above to form a foamable composite molten resin stream having a core-sheath structure. The foamable composite molten resin stream is then extruded, expanded, cut and cooled to obtain multilayer expanded beads.

In the above-described dispersing medium release foaming method, the multilayer resin particles are discharged from a higher pressure zone in which no foaming thereof takes place to a lower pressure zone in which the foaming thereof takes place. The pressure difference between the higher pressure zone and the lower pressure zone is at least 400 kPa, preferably 500 to 15,000 kPa.

Examples of the blowing agent used in the dispersing medium release foaming method include organic physical blowing agents such as propane, isobutane, normal butane, isopentane, normal pentane, normal hexane, cyclopentane, cyclobutane, cyclohexane, chlorofluoromethane, trifluoromethane, 1,1,1,2-tetrafluoroethane, 1-chloro-1,1-difluoroethane, 1,1-difluoroethane and 1-chloro-1,2,2,2-tetrafluoroethane and hydrofluoroolefins, and inorganic physical blowing agents such as nitrogen, carbon dioxide, argon and air. Among these, an inorganic physical blowing agent, which does not lead to the destruction of the ozone layer and is inexpensive, is preferred, with nitrogen, air and carbon dioxide being particularly preferred. The above blowing agents may be used in combination of two or more thereof.

The amount of the blowing agent is determined as appropriate according to the relation between the intended bulk density of the expanded beads and the temperature at which the foaming is carried out. Specifically, the above blowing agents other than nitrogen and air are usually used in an amount of 2 to 50 parts by weight per 100 parts by weight of the resin particles. In the case of nitrogen and air, the blowing agent is used in such an amount that the pressure within the closed vessel is within the range of 1 to 5 MPa(G).

As the dispersing medium for dispersing the resin particles in the closed vessel, an aqueous dispersing medium is preferred. However, other dispersing media, such as ethylene glycol, glycerin, methanol and ethanol, may be used as long as the resin particles are not dissolved therein. Such other dispersing media may be used in combination with water, if desired. Usually, water is used as the dispersing medium.

The average cell diameter of the multilayer expanded beads may be controlled by adjustment of the kind and amount of the blowing agent, the expansion temperature and the amount of the cell controlling agent. The bulk density (expansion ratio) of the multilayer expanded beads may be controlled by adjustment of the kind of the blowing agent, the foaming temperature and the above-described difference in pressure at the time of the foaming. The bulk density of the expanded beads is generally smaller with an increase of the amount of the blowing agent, the foaming temperature and the pressure difference.

A melt-adhesion preventing agent may be incorporated into the dispersing medium for the purpose of preventing the multilayer resin particles dispersed therein from melt-adhering to each other during heating of the dispersion in the closed vessel. Any organic and inorganic material may be used as the melt-adhesion preventing agent, as long as it is insoluble in the dispersing medium and is not fused when heated. An inorganic material is generally preferably used.

Preferred examples of the inorganic melt-adhesion preventing agent include powders of kaolin, talc, mica, aluminum oxide, titanium oxide and aluminum hydroxide. The melt-adhesion preventing agent preferably has an average particle size of 0.001 to 100 $\mu$m, more preferably 0.001 to 30 $\mu$m, and is preferably added in an amount of 0.01 to 10 parts by weight per 100 parts by weight of the multilayer resin particles.

A dispersing aid such as an anionic surfactant, e.g., sodium dodecylbenzenesulfonate and sodium oleate, or aluminum sulfate may also be suitably used. The dispersing aid is preferably added in an amount of 0.001 to 5 parts by weight per 100 parts by weight of the multilayer resin particles.

When expanded beads with a low bulk density are to be produced, it is preferred to conduct so-called two-step expansion in which expanded beads are first produced by, for example, a dispersing medium release foaming method and the obtained expanded beads are further expanded. In the two-step expansion, the expanded beads obtained in the first step are charged in a closed pressure vessel, and the inner pressure of the expanded beads is increased to 0.01 to 0.6 MPa(G) using a gas such as air. The resulting expanded beads are then taken out of the vessel and heated with a heating medium such as steam. In this way, expanded beads having a low bulk density may be easily obtained.

The molded article may be produced by filling the expanded beads in a mold cavity and heating the expanded beads with steam by customarily known method. More specifically, the expanded beads are filled in a mold cavity and, hereafter, steam is fed into the mold cavity to further expand and mutually fusion bond the expanded beads to each other, thereby obtaining the molded article having a shape conforming to the mold cavity. If desired, the expanded beads may be subjected to a pressurizing treatment to increase the inside pressure of the expanded beads to 0.01 to 0.2 MPa(G) in the same manner as that of the step of the above-described two-step expansion.

The steam pressure used in the in-mold molding is preferably 0.05 to 0.46 MPa(G), more preferably 0.07 to 0.30 MPa(G), still more preferably 0.09 to 0.28MPa(G) , still more preferably 0.1 to 0.25MPa(G).

The desired molded article may be also obtained by a method in which the expanded beads are compressively filled in the mold cavity with a compression ratio of 4 to 25 volume %, more preferably 5 to 20 volume %, and then in-mold molded with steam. The term "compression ratio" refers to the percentage of a reduced volume of the expanded beads by the compression relative to the volume thereof before the compression.

The compression ratio can be controlled by adjusting the amount of the expanded beads filled into the mold cavity. Namely, the expanded beads are filled in an amount greater than the inside volume of the mold cavity in a cracked state where the mold is not fully closed but is opened in a desired degree. Such a method of filling is called "cracking filling method" and is adopted for the purpose of discharging air in the mold cavity out of the mold and of efficiently filling the expanded beads in the mold cavity. The cracking or opening of the mold is fully closed after completion of the filling so that the expanded beads are in a compressed state at the time steam is fed into the mold cavity.

The following nonlimiting examples will further illustrate the present invention.

The kind and physical properties of random copolymer (A) used in Examples and Comparative Examples are summarized in Table 1. The kind and physical properties of random copolymer (B) used in Examples and Comparative Examples are summarized in Table 2.

Table 1

| Random Copolymer (A) | Resin 1A | Resin 2A | Resin 3A | Resin 4A | Resin 5A |
|---|---|---|---|---|---|
| Kind of Resin | Ethylene-propylene random copolymer | Ethylene-propylene random copolymer | Ethylene-propylene random copolymer | Ethylene-propylene random copolymer | Ethylene-propylene random copolymer |
| Ethylene Unit content (EtA) [% by mass] | 2.1 | 2.1 | 3.1 | 2.1 | 2.8 |
| Melting Point (TmA) [°C] | 144.9 | 144.6 | 141.2 | 145.2 | 142.8 |
| Crystallization Temperature (TcA) [°C] | 102.3 | 102.1 | 104.2 | 104.4 | 102.8 |
| TmA-TcA [°C] | 42.6 | 42.5 | 37.0 | 40.8 | 40.0 |
| Heat of Fusion ($\triangle$Hr) [J/g] | 80.2 | 80.2 | 74.2 | 80.3 | 79.4 |
| MFR [g/10min] | 5 | 5 | 7.3 | 10 | 6 |
| Bending Modulus [MPa] | 950 | 950 | 840 | 950 | 980 |
| Molecular Weight (Mn) | $4.1 \times 10^4$ | $3.5 \times 10^4$ | $4.9 \times 10^4$ | $3.5 \times 10^4$ | $5.2 \times 10^4$ |
| Molecular Weight (Mw) | $3.8 \times 10^5$ | $3.3 \times 10^5$ | $2.7 \times 10^5$ | $2.3 \times 10^5$ | $3.2 \times 10^5$ |
| Molecular Weight (Mz) | $2.1 \times 10^6$ | $1.5 \times 10^6$ | $8.2 \times 10^5$ | $6.8 \times 10^5$ | $1.2 \times 10^6$ |
| Molecular Weight Distribution (Mw/Mn) | 9.2 | 9.2 | 5.5 | 6.7 | 6.0 |
| Molecular Weight Distribution (Mz/Mn) | 52 | 42.3 | 17 | 20 | 22 |

Table 2

| Random Copolymer (B) | Resin 1B | Resin 2B |
|---|---|---|
| Kind of Resin | Ethylene-propylene random copolymer | Ethylene-propylene-butene random copolymer |
| Ethylene Unit Content (EtB) [% by mass] | 3.5 | 3.1 |
| Butene Unit Content [% by mass] | 0 | 3.8 |
| Melting Point (TmB) [°C] | 133.5 | 133.0 |
| Crystallization Temperature (TcB) [°C] | 93 | 91 |
| Heat of Fusion ($\triangle$Hr) [J/g] | 65 | 60 |

(continued)

| Random Copolymer (B) | Resin 1B | Resin 2B |
|---|---|---|
| Kind of Resin | Ethylene-propylene random copolymer | Ethylene-propylene-butene random copolymer |
| MFR [g/10min] | 5 | 6 |
| Bending Modulus [MPa] | 680 | 690 |

In Tables 1 and 2, the ethylene unit contents (EtA and EtB), melt flow rate (MFR) and bending modulus were measured by the method described previously.

In Tables 1 and 2, the melting points (TmA) and (TmB), crystallization temperatures (TcA) and (TcB) and heat of fusion (ΔHr) were measured as follows.

The melting points (TmA) and (TmB) were measured by heat flux differential scanning calorimetry according to JIS K7121(1987). A sample resin (2 mg of random copolymer resin (A) or (B)) was heated from 30°C to 200°C at a heating rate of 10°C/min, then cooled to 30°C at a cooling rate of 10°C/min, and again heated to 200°C at a heating rate of 10°C/min to obtain a DSC curve. The peak top temperature of the melting peak on the DSC curve was defined as the melting point of the resin. The heat of fusion (ΔHr) was the calorific value of the melting peak. The crystallization temperatures (TcA) and (TcB) were also measured by heat flux differential scanning calorimetry according to JIS K7121(1987). A sample resin was heated from 30°C to 200°C at a heating rate of 10°C/min and then cooled to 30°C at a cooling rate of 10°C/min to obtain a DSC curve. The peak top temperature of the crystallization peak on the DSC curve was defined as the crystallization peak of the resin. As a measuring device, a heat flux differential scanning calorimeter "DSC Q1000" (manufactured by TA Instruments) was used.

In Tables 1 and 2, the molecular weights Mn, Mw and Mz were measured by the method described previously. More particularly, the following method was adopted. Sampled expanded beads (30 mg) were shaken in 20 mL o-chlorobenzene at 145°C and then hot filtered through a 1.0 μm sintered filter. The thus pretreated sample was subjected to gel chromatography as follows:

Measuring apparatus: High temperature GPC system HLC-8321 GPC/HT (Tosoh Corporation)

Analyzer: Data processing software Empower 3 (Japan Waters Corporation)
Columns: TSKgel GMH6-HT (two colums) and TSKgel GMH6-HTL2 (two columns) each having an inside diameter of 7.5 mm and a length of 300 mm and produced by Tosoh Corporation
Mobile phase: o-chlorobenzene containing 0.025% of BHT
Column Temperature: 140°C
Detector: Differential refractometer (RI)
Flow rate: 1.0 mL/min
Sample concentration: 0.15% (W/V) o-chlorobenzene
Injection amount: 400 μL
Sampling time interval: 1 sec
Column correction: Monodispersed polystyrene (manufactured by Toso Corporation)
Molecular weight conversion: Polypropylene (PP) conversion/universal calibration

Examples 1 to 4 and Comparative Examples 1 to 7

Preparation of multilayer resin particles

Use was made of a device having first extruder with an inside diameter of 50 mm and second extruder with an inside diameter of 30 mm. These extruders were connected to a strand forming die for forming multilayer strands each having a core layer and a surface layer provided over a side peripheral surface of the core layer. The random copolymer (A) of the kind and amount shown in Tables 3-1, 3-2 and 3-3 was fed to the first extruder for forming the core layer together with a carbon black master batch and a cell controlling agent master batch of the amount shown in Tables 3-1, 3-2 and 3-3. At the same time, the random copolymer (B) of the kind and amount shown in Tables 3-1, 3-2 and 3-3 and a carbon black master batch resin of the amount shown in Tables 3-1, 3-2 and 3-3 were fed to the second extruder for forming the surface layer. The contents in the first and second extruders were heated, melted and kneaded therein at a set temperature of 200 to 220°C. The resulting molten resin mixtures in the first and second extruders were fed to the die, joined in the die (mass ratio of the core layer to the surface layer was 95:5) and coextruded through the small holes of a mouthpiece attached at a tip of the die as multilayer strands. The coextruded strands were immersed in water and cooled with water. The cooled strands were cut with a pelletizer into cylindrical multilayer resin particles each having a weight of 1.2 mg and an LID of 2.9 and having a dual layer (core-shell) structure. The weight and LID of the multilayer resin particles are arithmetic mean values obtained from 100 multilayer resin particles randomly extracted from the multilayer resin particles. In Comparative Examples 5 and 6, the resin particles obtained were single layer resin particles. The carbon black of the carbon black master batch was pigment carbon black. The cell controlling agent of the cell controlling agent master batch was zinc borate (average particle size 9 $\mu$m).

Table 3-1

| Example | | 1 | 2 | 3 | 4 |
|---|---|---|---|---|---|
| Raw Materials of Surface Layer | Random Copolymer (B) [% by mass] | Resin 1B | Resin 1B | Resin 2B | Resin 1B |
| | | 4.9 | 4.9 | 4.9 | 4.9 |
| | Carbon Black [% by mass] | 0.1 | 0.1 | 0.1 | 0.1 |
| | Total Amount of Surface Layer [% by mass] | 5.0 | 5.0 | 5.0 | 5.0 |
| Raw Materials of Foamed Core Layer | Random Copolymer (A) [% by mass] | Resin 1A | Resin 1A | Resin 1A | Resin 2A |
| | | 92.2 | 92.2 | 92.2 | 92.2 |
| | Cell Controlling Agent [% by mass] | 0.1 | 0.1 | 0.1 | 0.1 |
| | Carbon Black [% by mass] | 2.7 | 2.7 | 2.7 | 2.7 |
| | Total Amount of Foamed Core Layer [% by mass] | 95.0 | 95.0 | 95.0 | 95.0 |
| Difference in Melting Point (TmA - TmB) [°C] | | 11.4 | 11.4 | 11.9 | 11.1 |
| Ethylene Unit Content of Random Copolymer (B) (EtB) [% by mass] | | 3.5 | 3.5 | 3.1 | 3.5 |
| Ethylene Unit Content of Random Copolymer (A) (EtA) [% by mass] | | 2.1 | 2.1 | 2.1 | 2.1 |
| Ratio of Ethylene Unit Content (EtB/EtA) | | 1.7 | 1.7 | 1.5 | 1.7 |

Table 3-2

| Comparative Example | | 1 | 2 | 3 | 4 |
|---|---|---|---|---|---|
| Raw Materials of Surface Layer | Random Copolymer (B) [% by mass] | Resin 2B | Resin 2B | Resin 1B | Resin 2B |
| | | 4.9 | 4.9 | 4.9 | 4.9 |
| | Carbon Black [% by mass] | 0.1 | 0.1 | 0.1 | 0.1 |
| | Total Amount of Surface Layer [% by mass] | 5.0 | 5.0 | 5.0 | 5.0 |
| Raw Materials of Foamed Core Layer | Random Copolymer (A) [% by mass] | Resin 3A | Resin 3A | Resin 4A | Resin 5A |
| | | 92.2 | 92.2 | 92.2 | 92.2 |
| | Cell Controlling Agent [% by mass] | 0.1 | 0.1 | 0.1 | 0.1 |
| | Carbon Black [% by mass] | 2.7 | 2.7 | 2.7 | 2.7 |
| | Total Amount of Foamed Core Layer [% by mass] | 95.0 | 95.0 | 95.0 | 95.0 |
| Difference in Melting Point (TmA - TmB) [°C] | | 8.2 | 8.2 | 11.7 | 9.8 |
| Ethylene Unit Content of Random Copolymer (B) (EtB) [% by mass] | | 3.1 | 3.1 | 3.5 | 3.1 |
| Ethylene Unit Content of Random Copolymer A (EtA) [% by mass] | | 3.1 | 3.1 | 2.1 | 2.8 |

(continued)

| Comparative Example | 1 | 2 | 3 | 4 |
|---|---|---|---|---|
| Ratio of Ethylene Unit Content (EtB/EtA) | 1.0 | 1.0 | 1.7 | 1.1 |

Table 3-3

| Comparative Example | | 5 | 6 | 7 |
|---|---|---|---|---|
| Raw Materials of Surface Layer | Random Copolymer (B) [% by mass] | - | - | Resin 2B |
| | | - | - | 4.9 |
| | Carbon Black [% by mass] | - | - | 0.1 |
| | Total Amount of Surface Layer [% by mass] | - | - | 5.0 |
| Raw Materials of Foamed Core Layer | Random Copolymer (A) [% by mass] | Resin 1A | Resin 3A | Resin 3A |
| | | 92.2 | 92.2 | 92.2 |
| | Cell Controlling Agent [% by mass] | 0.1 | 0.1 | 1 |
| | Carbon Black [% by mass] | 2.8 | 2.8 | 2.7 |
| | Total Amount of Foamed Core Layer [% by mass] | 95.1 | 95.1 | 95.9 |
| Difference in Melting Point (TmA - TmB) [°C] | | - | - | 8.2 |
| Ethylene Unit Content of Random Copolymer (B) (EtB) [% by mass] | | - | - | 3.1 |
| Ethylene Unit Content of Random Copolymer (A) (EtA) [% by mass] | | 2.1 | 3.1 | 3.1 |
| Ratio of Ethylene Unit Content (EtB/EtA) | | - | - | 1.0 |

In Tables 3-1, 3-2 and 3-3, the melting point difference (TmA - TmB) [°C] was calculated from TmA and TmB shown in Tables 1 and 2.

Preparation of multilayer expanded beads:

The thus obtained resin particles (20 kg) were charged in a 100 L autoclave together with 60 L of water as a dispersing medium, to which 15 g of kaolin as a dispersing agent, and 12 g of sodium alkylbenzenesulfonate and 3 g of aluminum sulfate as dispersing aids were added. Carbon dioxide as a physical blowing agent was then injected under pressure into the autoclave such that the inside pressure of the autoclave was the foaming pressure shown in Tables 4-1, 4-2 and 4-3. The contents were heated with stirring until the foaming temperature shown in Tables 4-1, 4-2 and 4-3 was reached and maintained at the same temperature for 15 minutes to adjust the heat of fusion of the high temperature peak. Thereafter, the contents of the autoclave were released to atmospheric pressure together with the water to obtain multilayer expanded beads. In Comparative Examples 5 and 6, the expanded beads obtained had a single layer structure. The physical properties of the thus obtained expanded beads were measured by the methods described previously to give the results shown in Tables 4-1, 4-2 and 4-3.

Table 4-1

| Example | | 1 | 2 | 3 | 4 |
|---|---|---|---|---|---|
| Expansion Conditions | Blowing Agent | CO$_2$ | CO$_2$ | CO$_2$ | CO$_2$ |
| | Foaming Temperature [°C] | 154 | 153 | 154 | 154 |
| | Foaming Pressure [MPa(G)] | 2.6 | 1.8 | 2.6 | 2.6 |

(continued)

| Example | | 1 | 2 | 3 | 4 |
|---|---|---|---|---|---|
| Physical Properties of Multilayer Expanded Beads | Bulk Density [kg/m$^3$] | 41 | 62 | 41 | 41 |
| | Melting Point (Tmf) [°C] | 144.6 | 144.6 | 140.9 | 144.3 |
| | Crystallization Temperature (Tcf) [°C] | 104.2 | 104.2 | 104.2 | 104.0 |
| | Difference (Tmf-Tcf) [°C] | 40.4 | 40.4 | 36.7 | 40.3 |
| | Average Cell Diameter [μm] | 195 | 195 | 195 | 190 |
| | Intrinsic Peak Apex temperature [°C] | 140.4 | 140.4 | 140.4 | 140.3 |
| | Intrinsic Peak Melting End Temperature (γ) [°C] | 153.7 | 153.7 | 153.7 | 153.9 |
| | Heat of Fusion of Intrinsic Peak [J/g] | 60.9 | 60.9 | 61.5 | 61.2 |
| | High Temperature Peak Apex Temperature [°C] | 160.7 | 160.7 | 160.7 | 160.7 |
| | Difference between High Temperature Peak Apex Temperature and Melting End Temperature ($T_E$) [°C] | 6.7 | 6.7 | 6.7 | 6.7 |
| | Melting End Temperature ($T_E$) [°C] | 167.4 | 167.4 | 167.4 | 167.4 |
| | Heat of Fusion of High Temperature Peak (ΔH2) [J/g] | 13 | 13 | 13 | 13 |

Table 4-2

| Comparative Example | | 1 | 2 | 3 | 4 |
|---|---|---|---|---|---|
| Expansion Conditions | Blowing Agent | $CO_2$ | $CO_2$ | $CO_2$ | $CO_2$ |
| | Foaming Temperature [°C] | 150 | 150 | 154 | 154 |
| | Foaming Pressure [MPa(G)] | 2.2 | 2.2 | 2.6 | 2.6 |
| Physical Properties of Multilayer Expanded Beads | Bulk Density [kg/m$^3$] | 41 | 41 | 41 | 41 |
| | Melting Point (Tmf) [°C] | 140.9 | 140.9 | 144.9 | 142.5 |
| | Crystallization Temperature (Tcf) [°C] | 106.1 | 106.1 | 106.3 | 104.7 |
| | Difference (Tmf-Tcf) [°C] | 34.8 | 34.8 | 38.6 | 37.8 |
| | Average Cell Diameter [μm] | 187 | 187 | 195 | 185 |
| | Intrinsic Peak Apex temperature [°C] | 138.3 | 138.3 | 138.8 | 138.2 |
| | Intrinsic Peak Melting End Temperature (γ) [°C] | 151.1 | 151.1 | 151.8 | 150.7 |
| | Heat of Fusion of Intrinsic Peak [J/g] | 61.4 | 61.4 | 57.9 | 63.9 |
| | High Temperature Peak Apex Temperature [°C] | 157.8 | 157.8 | 156.3 | 157.9 |
| | Difference between High Temperature Peak Apex Temperature and Melting End Temperature ($T_E$) [°C] | 8.1 | 12.2 | 12.8 | 8 |
| | Melting End Temperature ($T_E$) [°C] | 165.9 | 170 | 169.1 | 165.9 |
| | Heat of Fusion of High Temperature Peak (ΔH2) [J/g] | 14.5 | 14.5 | 18 | 14.2 |

Table 4-3

| Comparative Example | | 5 | 6 | 7 |
|---|---|---|---|---|
| Expansion Conditions | Blowing Agent | $CO_2$ | $CO_2$ | $CO_2$ |
| | Foaming Temperature [°C] | 154 | 150 | 151.5 |
| | Foaming Pressure [MPa(G)] | 2.6 | 2.2 | 1.2 |
| Physical Properties of Expanded Beads | Bulk Density [kg/m³] | 41 | 41 | 62 |
| | Melting Point (Tmf) [°C] | 144.6 | 140.9 | 140.9 |
| | Crystallization Temperature (Tcf) [°C] | 104.2 | 106.1 | 106.1 |
| | Difference (Tmf-Tcf) [°C] | 40.4 | 34.8 | 34.8 |
| | Average Cell Diameter [μm] | 195 | 187 | 187 |
| | Intrinsic Peak Apex temperature [°C] | 140.4 | 138.3 | 138.3 |
| | Intrinsic Peak Melting End Temperature (γ) [°C] | 153.7 | 151.1 | 151.1 |
| | Heat of Fusion of Intrinsic Peak [J/g] | 61.4 | 61.4 | 61.4 |
| | High Temperature Peak Apex Temperature [°C] | 160.7 | 157.8 | 157.8 |
| | Difference between High Temperature Peak Apex Temperature and Melting End Temperature ($T_E$) [°C] | 6.7 | 8.1 | 8.1 |
| | Melting End Temperature ($T_E$) [°C] | 167.4 | 165.9 | 165.9 |
| | Heat of Fusion of High Temperature Peak (ΔH2) [J/g] | 13 | 14.5 | 14.5 |

In Table 4, the bulk density, melting point (Tmf), crystallization temperature (Tcf) and average cell diameter were measured by the methods described previously. The thermal properties of the expanded beads were measured as follows. With a differential scanning calorimeter "DSC Q1000" (manufactured by TA Instruments) the expanded beads sample (about 3 mg) was heated from 23°C to 200°C at a heating rate of 10°C/min to obtain a DSC curve, from which the melting point and crystallization temperature were determined. In Table 4, the intrinsic peak apex temperature, the intrinsic peak melting end temperature (γ), the heat of fusion of intrinsic peak, the high temperature peak apex temperature, the melting end temperature ($T_E$) and the heat of fusion of high temperature peak (ΔH2) were measured by the methods described previously.

Pressurizing treatment of the expanded beads:

In Examples 1, 3, 4 and Comparative Examples 1 to 6, the obtained expanded beads were subjected to a pressurizing treatment for increasing the internal pressure in the cells thereof. Thus, after the expanded beads had been placed in a pressuring tank, air was injected thereinto to increase the internal pressure in the cells and the pressure-treated expanded beads were taken out of the tank. The internal pressure in the cells of the pressure treated expanded beads was 0.1 MPa (absolute pressure). The pressure treated expanded beads were used for the production of expanded beads molded articles. In Example 2 and Comparative Example 7, on the other hand, such a pressurizing treatment was not carried out and the expanded beads were used as such for the production of expanded beads molded articles.

Production of expanded beads molded article:

Use was made of a mold having a mold cavity configured to mold a molded product in the form of a rectangular parallelopiped shape with a size of a length of 300 mm, a width of 250 mm and a thickness of 50 mm. The expanded beads were filled in the mold cavity which was not be fully closed but was slightly opened to provide a clearance of 5 mm in the thickness direction. Namely, the size of the mold cavity in the thickness direction in this state was 55 mm (cracking: 5 mm, expanded beads compression ratio 10%).

Then, in-mold molding by steam heating was performed to secondarily expand and mutually fuse bond the expanded beads, thereby obtaining a plate-shaped expanded beads molded article. The heating method was as follows. Steam was fed 5 seconds for preheating with drain valves of the both sides being opened (purging step). Then, one-way flow heating and full heating steps were carried out. In the one-way flow heating step, steam was at a steam pressure lower by 0.08 MPa(G) than that in the full heating step and, subsequently, reversed one-direction flow heating was carried out at a steam pressure lower by 0.04 MPa(G) than that in the full heating step. The full heating step (both-direction flow heating) was then carried out at the steam pressure shown in Table 5. After completion of the heating, the pressure was released and the molded product was cooled with water until a surface pressure thereof reached 0.04 MPa(G). Then, the mold was opened. The molded product was taken out of the mold cavity and aged in an environment at 80°C for 12 hours under the atmospheric pressure, thereby obtaining an expanded beads molded article. The physical properties of the obtained molded article are shown in Table 5. The water cooling time shown in Table 5 is a time period between the start of the water cooling and a point in time at which the surface pressure was reached 0.04 MPa(G).

The remarks in Table 5 are as follows:

*1: The pressurizing treatment was not carried out.
*2: The molded article was inflated and deformed.
*3: The compressive strength was unable to measure.

Table 5

| | | Example | 1 | 2 | 3 | 4 | | | | | | | |
| | | Comparative Example | | | | | 1 | 2 | 3 | 4 | 5 | 6 | 7 |
| Molding Conditions | Beads Inside Pressure [MPa(G)] | | 0.1 | *1 | 0.1 | 0.1 | 0.1 | 0.1 | 0.1 | 0.1 | 0.1 | 0.1 | *1 |
| | Steam Pressure [MPa(G)] | | 0.24 | 0.28 | 0.24 | 0.24 | 0.24 | 0.24 | 0.24 | 0.26 | 0.30 | 0.28 | 0.24 |
| | Water Cooling Time [sec] | | 80 | 80 | 85 | 80 | 110 | 95 | 105 | 125 | 240 | 185 | 125 |
| Expanded Beads Molded Articles | Density [kg/m$^3$] | | 45 | 69 | 45 | 45 | 45 | 45 | 45 | 45 | 45 | 45 | 69 |
| | Shrinkage rate [%] | | 2.0 | 2.0 | 2.0 | 2.0 | 2.0 | *2 | 2.0 | 2.0 | 2.0 | 2.0 | 2.0 |
| | Fusion Bonding Rate [%] | | 95 | 95 | 95 | 95 | 95 | 95 | 95 | 95 | 95 | 95 | 95 |
| | Compressive stress at 50% strain [kPa] | | 332 | 565 | 332 | 332 | 375 | *3 | 332 | 395 | 330 | 375 | 638 |

In Table 5, the density, shrinkage rate, fusion bonding rate and compressive stress at 50% strain of the expanded beads molded articles are measured as follows.

Density of expanded beads molded articles:

The expanded beads molded article was measured for its weight and volume. The volume was determined from the external dimensions of the molded article. The density of the molded article was calculated by the weight thereof by the volume thereof with appropriate unit conversion to [$kg/m^3$].

Shrinkage rate:

The shrinkage rate (%) of the molded article was calculated from the formula (L1 - L0) /L1 $\times$ 100, where L1 is the longitudinal dimension of the molded cavity (namely 300 mm) and L0 is a length [mm] of the molded article after a heat treatment that is performed as follows. The molded article is aged at 80°C for 12 hours, allowed to gradually cool and again aged at 23°C for 6 hours. The shrinkage rate (%) is an arithmetic mean of ten molded article samples.

Fusion bonding rate:

The expanded beads molded article was folded and broken. The broken-out section exposed by this procedure was visually inspected to count a number (C1) of expanded beads exposed on the broken-out section and a number (C2) of the expanded beads which underwent material fracture. A percentage ((C2/C1$\times$100) of the expanded beads which underwent material fracture relative to the number of the expanded beads present on the broken-out section represents the fusion bonding rate (%).

Compressive stress at 50% strain:

A test piece without skin with a length of 50 mm, a width of 50 mm and a thickness of 25 mm was cut out of the expanded beads molded article, and a compression test was conducted at a compression rate of 10 mm/min according to JIS K6767(1999) to obtain the compressive stress at 50% strain of the expanded beads molded article. The test was conducted on ten test pieces, and the average of the obtained values represents the compressive stress at 50% strain (kPa).

From the results shown in Table 5, it is appreciated that the multilayer expanded beads of Examples 1 to 4, which meet with the requirements of the present invention recited in appended claim 1, are capable of significantly shortening the water cooling time as compared with the multilayer expanded beads of Comparative Examples 1 to 4 and 7 in which one or both of the molecular weight distribution Mw/Mn and Mn do not fall within the required range. Although use of an increased molding time generally results in an increased cooling time , shortening of the water cooling time is attained in the present invention even when the molding temperature is high. Further, such a cooling time reducing effect is obtained even without a pressurizing treatment. In Comparative Examples 1 to 4, the water cooling time is long even though the molding pressure is not increased. In Comparative Example 2, the water cooling time is shortened compared with that in Comparative Example 1. This results in deformation of the molded product. The expanded beads of Comparative Examples 5 and 6 do not have a surface layer, and the water cooling time is much longer than those in the other Comparative Examples.

**Claims**

1. A multilayer expanded bead comprising a foamed core layer comprising an ethylene-propylene random copolymer, and a surface layer comprising a polyolefin-based resin and covering the foamed core layer,

   wherein the ethylene-propylene random copolymer has an ethylene unit content of 1.5% by mass or more and 3.5% by mass or less, a number average molecular weight (Mn) of 30,000 or more and 50,000 or less and a weight average molecular weight (Mw) of 200,000 or more and 500,000 or less,
   wherein a ratio (Mw/Mn) of the weight average molecular weight (Mw) to the number average molecular weight (Mn) is 7 or more and 15 or less, and wherein each of the quoted physical properties is as measured by the method disclosed in the specification.

2. The multilayer expanded bead according to claim 1, wherein the ethylene-propylene random copolymer has a crystallization temperature of TcA [°C] and a melting point of TmA [°C] and wherein the crystallization temperature TcA and melting point TmA satisfy the following relationship:

$40 \leq TmA - TcA \leq 50$, and wherein each of the quoted physical properties is as measured by the method disclosed in the specification.

3. The multilayer expanded bead according to claim 1 or 2, wherein the ethylene-propylene random copolymer has a Z average molecular weight (Mz) and wherein a ratio (Mz/Mn) of the Z average molecular weight (Mz) to the number average molecular weight (Mn) is 30 or more and 60 or less, and wherein each of the quoted physical properties is as measured by the method disclosed in the specification.

4. The multilayer expanded bead according to any one of claims 1 to 3, wherein the polyolefin-based resin of the surface layer has a melting point of TmB [°C] and wherein the melting point TmB and melting point TmA satisfy the following relationship:

$0 <\_ TmA-TmB <\_ 20$, and wherein each of the quoted physical properties is as measured by the method disclosed in the specification.

5. The multilayer expanded bead according to any one of claims 1 to 4, having a bulk density of 10 kg/m$^3$ or more and 300kg/m$^3$ or less.

6. The multilayer expanded bead according to any one of claims 1 to 5, wherein a melt flow rate of the polyolefin-based resin of the surface layer is 1 g/10min or more and 20 g/10min or less and is smaller than that of the ethylene-propylene random copolymer of the foamed core layer,

wherein the polyolefin-based resin of the surface layer is a polypropylene-based resin or a polyethylene-based resin, and

wherein the melt flow rate is as measured at

(i) a temperature of 230°C and a load of 2.16 kg when the polyolefin-based resin is the polypropylene-based resin,

(ii) a temperature of 190°C and a load of 2.16 kg when the polyolefin-based resin is the polyethylene-based resin.

7. The multilayer expanded bead according to any one of claims 1 to 6, wherein the polyolefin-based resin of the surface layer is an ethylene-propylene random copolymer.

8. The multilayer expanded bead according to claim 7, wherein the ethylene-propylene random copolymer of the surface layer has an ethylene unit content that is greater than that of the ethylene-propylene random copolymer of the foamed core layer .

9. The multilayer expanded bead according to any one of claims 1 to 8, wherein a weight ratio of the foamed core layer to the surface layer is in the range of 99.5:0.5 to 65:35.

10. An expanded beads molded article comprising a multiplicity of the multilayer expanded beads according to any one of the preceding claims that are mutually fusion-bonded together.

**Patentansprüche**

1. Mehrschichtige expandierte Perle, umfassend eine geschäumte Kernschicht, die ein statistisches Ethylen-Propylen-Copolymer umfasst, und eine Oberflächenschicht, die ein Harz auf Polyolefinbasis umfasst und die geschäumte Kernschicht bedeckt,

wobei das statistische Ethylen-Propylen-Copolymer einen Gehalt an Ethyleneinheiten von 1,5 Massenprozent oder mehr und 3,5 Massenprozent oder weniger, ein Zahlenmittel des Molekulargewichts (Mn) von 30.000 oder mehr und 50.000 oder weniger und ein Gewichtsmittel des Molekulargewichts (Mw) von 200.000 oder mehr und 500.000 oder weniger aufweist,
wobei das Verhältnis (Mw/Mn) des gewichtsmittleren Molekulargewichts (Mw) zum zahlenmittleren Molekulargewicht (Mn) 7 oder mehr und 15 oder weniger beträgt, und wobei jede der genannten physikalischen Eigenschaften nach dem in der Beschreibung offengelegten Verfahren gemessen wird.

**2.** Mehrschichtige expandierte Perle nach Anspruch 1, wobei das statistische Ethylen-Propylen-Copolymer eine Kristallisationstemperatur von TcA[°C] und einen Schmelzpunkt von TmA [°C] aufweist und wobei die Kristallisationstemperatur TcA und der Schmelzpunkt TmA die folgende Beziehung erfüllen:

$40 \leq TmA - TcA \leq 50$, und wobei jede der genannten physikalischen Eigenschaften nach dem in der Beschreibung offengelegten Verfahren gemessen wird.

**3.** Mehrschichtiges expandiertes Kügelchen nach Anspruch 1 oder 2, wobei das statistische Ethylen-Propylen-Copolymer ein Z-Mittel des Molekulargewichts (Mz) aufweist und wobei das Verhältnis (Mz/Mn) des Z-Mittel des Molekulargewichts (Mz) zum Zahlenmittel des Molekulargewichts (Mn) 30 oder mehr und 60 oder weniger beträgt, und wobei jede der angegebenen physikalischen Eigenschaften nach dem in der Beschreibung offengelegten Verfahren gemessen wird.

**4.** Mehrschichtige expandierte Perle nach einem der Ansprüche 1 bis 3, wobei das Harz auf Polyolefinbasis der Oberflächenschicht einen Schmelzpunkt von TmB [°C] hat und wobei der Schmelzpunkt TmB und der Schmelzpunkt TmA die folgende Beziehung erfüllen:

$0 \leq TmA - TmB \leq 20$, und wobei jede der genannten physikalischen Eigenschaften nach dem in der Beschreibung offengelegten Verfahren gemessen wird.

**5.** Mehrschichtige expandierte Perle nach einem der Ansprüche 1 bis 4 mit einer Schüttdichte von 10 kg/m³ oder mehr und 300 kg/m³ oder weniger.

**6.** Mehrschichtige expandierte Perle nach einem der Ansprüche 1 bis 5, wobei die Schmelzflussrate des Harzes auf Polyolefinbasis der Oberflächenschicht 1 g/10min oder mehr und 20 g/10min oder weniger beträgt und kleiner ist als die des statistischen Ethylen-Propylen-Copolymers der geschäumten Kernschicht,

wobei das Harz auf Polyolefinbasis der Oberflächenschicht ein Harz auf Polypropylenbasis oder ein Harz auf Polyethylenbasis ist, und

wobei die Schmelzflussrate gemessen wird bei

(i) einer Temperatur von 230°C und einer Last von 2,16 kg, wenn das Harz auf Polyolefinbasis das Harz auf Polypropylenbasis ist,

(ii) einer Temperatur von 190°C und einer Belastung von 2,16 kg, wenn das Harz auf Polyolefinbasis das Harz auf Polytheylenbasis ist.

**7.** Mehrschichtige expandierte Perle nach einem der Ansprüche 1 bis 6, wobei das Harz auf Polyolefinbasis der Oberflächenschicht ein statistisches Ethylen-Propylen-Copolymer ist.

**8.** Mehrschichtige expandierte Perle nach Anspruch 7, wobei das statistische Ethylen-Propylen-Copolymer der Oberflächenschicht einen Gehalt an Ethyleneinheiten aufweist, der größer ist als der des statistischen Ethylen-Propylen-Copolymers der geschäumten Kernschicht .

**9.** Mehrschichtige expandierte Perle nach einem der Ansprüche 1 bis 8, wobei das Gewichtsverhältnis zwischen der geschäumten Kernschicht und der Oberflächenschicht im Bereich von 99,5:0,5 bis 65:35 liegt.

**10.** Geformter Gegenstand aus expandierten Perlen, der eine Vielzahl von mehrschichtigen expandierten Perlen nach einem der vorangehenden Ansprüche umfasst, die miteinander verschmolzen sind.

## Revendications

**1.** Perle expansée multicouche comprenant une couche centrale moussée comprenant un copolymère aléatoire à base d'éthylène et de propylène, et une couche de surface comprenant une résine à base de polyoléfine et recouvrant la couche centrale moussée,

dans laquelle le copolymère aléatoire à base d'éthylène et de propylène présente une teneur en unités d'éthylène comprise entre 1,5 % en masse ou plus et 3,5 % en masse ou moins, une masse moléculaire moyenne en nombre (Mn) comprise entre 30 000 et 50 000 et une masse moléculaire moyenne en poids (Mw) comprise entre 200 000 et 500 000,

dans laquelle le rapport (Mw/Mn) entre la masse moléculaire moyenne en poids (Mw) et la masse moléculaire moyenne en nombre (Mn) est supérieur ou égal à 7 et inférieur ou égal à 15, et dans laquelle chacune des propriétés physiques citées est mesurée par le procédé divulgué dans la spécification.

2. Perle expansée multicouche selon la revendication 1, dans laquelle le copolymère aléatoire à base d'éthylène et de propylène a une température de cristallisation TcA [°C] et un point de fusion TmA [°C] et dans laquelle la température de cristallisation TcA et le point de fusion TmA satisfont à la relation suivante : $40 \leq TmA\text{-}TcA \leq 50$, et dans laquelle chacune des propriétés physiques citées est mesurée par le procédé divulgué dans la spécification.

3. Perle expansée multicouche selon la revendication 1 ou la revendication 2, dans laquelle le copolymère aléatoire à base d'éthylène et de propylène a une masse moléculaire moyenne Z (Mz) et dans laquelle un rapport (Mz/Mn) de la masse moléculaire moyenne Z (Mz) à la masse moléculaire moyenne en nombre (Mn) est supérieur ou égal à 30 et inférieur ou égal à 60, et dans laquelle chacune des propriétés physiques citées est mesurée par le procédé divulgué dans la spécification.

4. Perle expansée multicouche selon l'une quelconque des revendications 1 à 3, dans laquelle la résine à base de polyoléfine de la couche de surface a un point de fusion TmB [°C] et dans laquelle le point de fusion TmB et le point de fusion TmA satisfont à la relation suivante : $0 \leq TmA\text{-}TmB \leq 20$, et dans laquelle chacune des propriétés physiques citées est mesurée par le procédé divulgué dans la spécification.

5. Perle expansée multicouche selon l'une quelconque des revendications 1 à 4, ayant une densité apparente comprise entre 10 kg/m$^3$ ou plus et 300 kg/m$^3$ ou moins.

6. Perle expansée multicouche selon l'une quelconque des revendications 1 à 5, dans laquelle un taux d'écoulement à l'état fondu de la résine à base de polyoléfine de la couche de surface est compris entre 1 g/10 min et 20 g/10 min ou moins et est inférieur à celui du copolymère aléatoire à base d'éthylène et de propylène de la couche centrale moussée,

dans laquelle la résine à base de polyoléfine de la couche de surface est une résine à base de polypropylène ou une résine à base de polyéthylène, et
dans laquelle le taux d'écoulement à l'état fondu est mesuré à

(i) une température de 230 °C et une charge de 2,16 kg lorsque la résine à base de polyoléfine est la résine à base de polypropylène,
(ii) une température de 190 °C et une charge de 2,16 kg lorsque la résine à base de polyoléfine est la résine à base de polyéthylène.

7. Perle expansée multicouche selon l'une quelconque des revendications 1 à 6, dans laquelle la résine à base de polyoléfine de la couche de surface est un copolymère aléatoire à base d'éthylène et de propylène.

8. Perle expansée multicouche selon la revendication 7, dans laquelle le copolymère aléatoire à base d'éthylène et de propylène de la couche de surface a une teneur en unités d'éthylène supérieure à celle du copolymère aléatoire à base d'éthylène et de propylène de la couche centrale moussée.

9. Perle expansée multicouche selon l'une quelconque des revendications 1 à 8, dans laquelle le rapport en poids entre la couche centrale moussée et la couche de surface est compris entre 99,5:0,5 et 65:35.

10. Article moulé en perles expansées comprenant une multiplicité de perles expansées multicouches selon l'une quelconque des revendications précédentes qui sont mutuellement liées par fusion.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004068016 A
- US 2011147974 A1
- EP 3309197 A1
- US 2007208140 A1
- JP 2001151928 A
- JP S4116125 B
- JP S4323858 B
- JP S4429522 B
- JP S60185816 A